# EUROPÄISCHE PATENTSCHRIFT

(11) **EP 2 481 143 B1**
(45) Veröffentlichungstag und Bekanntmachung des Hinweises auf die Patenterteilung: **11.12.2013**
(21) Anmeldenummer: 10760304.5
(22) Anmeldetag: 23.09.2010
(51) Int. Cl.: H02K 7/14, H02K 7/10, H02K 5/12, B65G 23/08

(54) **TROMMELMOTOR**
DRUM MOTOR
MOTEUR À TAMBOUR

(30) Priorität: 24.09.2009 DE 202009012822 U
(43) Veröffentlichungstag der Anmeldung: 01.08.2012
(73) Patentinhaber: Interroll Holding AG, 6592 Sant' Antonino (CH)
(72) Erfinder: FROEBUS, Gerhard, 63688 Gedern (DE); DUDEK, Siegmund, 52525 Heinsberg (DE); VELLADURAI, Palani, 41640 Mönchengladbach (DE)
(74) Vertreter: Eisenführ, Speiser & Partner
(86) Internationale Anmeldenummer: PCT/EP2010/064064
(87) Internationale Veröffentlichungsnummer: WO 2011/036216

(56) Entgegenhaltungen:
- DE-A1-102006 060 009
- US-A- 5 156 263
- US-A- 5 253 748
- US-A- 5 934 447

## Beschreibung

Die Erfindung betrifft einen Trommelmotor zum Antreiben eines Förderbandes, insbesondere eines Gliederkettenbandes in einer hygienischen Umgebung mit Spritz- oder Strahlwasserbelastung, umfassend einen Trommelmotormantel mit einem darin ausgebildeten Hohlraum, in dem Hohlraum angeordnete Motorkomponenten, nämlich einen Rotor und einen Stator, einen an einem ersten Ende des Trommelmotormantels angeordneten ersten Lagerzapfen und einen an einem zweiten Ende des Trommelmotormantels angeordneten zweiten Lagerzapfen, wobei Rotor und Stator solcherart mit dem Trommelmotormantel und dem ersten und zweiten Lagerzapfen mechanisch gekoppelt sind, dass eine Relativdrehung zwischen Rotor und Stator eine Relativdrehung zwischen dem Trommelmotormantel einerseits und dem ersten und zweiten Lagerzapfen andererseits bewirkt.

Die Erfindung betrifft weiterhin ein Kettenrad zur Übertragung eines Drehmoments von einem Trommelmotor auf ein Gliederkettenband.

Trommelmotoren sind beispielsweise bekannt aus der US 5,156,263, der DE 10 2006 054 575 A1 und der EP 1 02 1664 B1 der Anmelderin. Trommelmotoren der eingangs genannten Art werden in Förderanlagen zum Antrieb von Förderbändern eingesetzt. Sie haben eine zylindrische Außenform, die durch den in der Regel stabförmigen Trommelmotormantel gebildet ist. Der Trommelmotormantel ist häufig als zylindrisches Hohlprofil ausgebildet. Im Hohlraum des Trommelmotormantels sind die Motorkomponenten Rotor und Stator angeordnet, die den Trommelmotormantel gegenüber den seitlich angeordneten Lagerzapfen rotierend antreiben. Der Trommelmotor wird an den Lagerzapfen gehalten, während der Trommelmotormantel ein Förderband, insbesondere ein Gliederkettenband, antreibt.

Typische Anwendungsbereiche von mit Trommelmotoren angetriebenen Förderanlagen sind beispielsweise Postverteilzentren, die lebensmittelverarbeitende Industrie, Montagelinien in der Elektronikindustrie, Maschinenverkettungen in der Automation, Fertigungsanlagen, Versand- und Verpackungslinien, Kommissioniersysteme pharmazeutischer Großverteiler, Palettentransport im Getränkevertrieb, Cargo Handling oder Kassentische in Supermärkten. Insbesondere in der lebensmittelverarbeitenden Industrie, wo beispielsweise Milchprodukte, Fisch oder Fleisch transportiert werden, müssen Trommelmotoren die hohen Anforderungen an die Hygiene in dieser Branche erfüllen sowie Waschvorgängen mit Chemikalien und heißem Wasser unter Hochdruck standhalten. Antriebssysteme mit Getriebemotoren, wie Trommelmotoren, stellen eine potenzielle Quelle von Verschmutzungen in der Lebensmittelverarbeitung dar. Trommelmotoren für den Einsatz in der Lebensmittelverarbeitung müssen daher so konstruiert und verarbeitet sein, dass das Risiko von Verschmutzungen reduziert wird. Diese Trommelmotoren bestehen daher meist aus glattem, profiliertem Edelstahl und sind hermetisch gekapselt und abgedichtet. In der Lebensmittelindustrie werden häufig Gliederkettenbänder aus Kunststoff eingesetzt. Zur Übertragung des Drehmoments des Trommelmotors auf die Förderbänder, insbesondere Gliederkettenbänder, kann eine auf dem Trommelmotormantel angeordnete Profilgummierung eingesetzt werden. Dabei ist das Gummiprofil auf den anzutreibenden Bandtyp abgestimmt. Durch die Profilgummierung wird die Reibung zwischen dem Trommelmotormantel und dem Förderband erhöht und Schlupf zwischen dem Trommelmotormantel und dem Förderband verhindert. Das Drehmoment kann auch über Kettenräder, vorzugsweise aus Edelstahl, übertragen werden, die eine zylindrische innere Aussparung haben und auf dem Trommelmotormantel angeordnet sind. Dazu wird das Drehmoment vom Trommelmotormantel über eine in einer Nut des Trommelmotormantels angeordnete Passfeder auf die Kettenräder übertragen.

Während diese Lösungen bereits eine gute Drehmomentübertragung und die Eignung für einen Einsatz im Lebensmittelbereich aufweisen, besteht jedoch weiterhin Bedarf nach Trommelmotoren mit einer weiter verbesserten und/oder vereinfachten Drehmomentübertragung sowie einer weiteren Reduktion des Verschmutzungsrisikos im Einsatz in der lebensmittelverarbeitenden Industrie.

Trommelmotoren unterliegen zudem als Produkte, die in größeren serien hergestellt werden, einem deutlichen Anspruch an eine kostengünstige und zugleich qualitativ hochwertige Fertigung. Es ist daher ein Bestreben, die Fertigungskosten von Trommelmotoren zu reduzieren, ohne hierbei deren Betriebseigenschaften, Einsatzdauer und Wartungsintervalle zu verschlechtern.

Es ist daher die Aufgabe der vorliegenden Erfindung einen oder mehrere der genannten Bedarfe zumindest teilweise zu decken.

Diese Aufgabe wird erfindungsgemäß dadurch gelöst, dass der Trommelmotormantel mindestens einen Drehmomentübertragungsabschnitt aufweist, in dem die Innen- und Außenfläche des Trommelmotormantels im Querschnitt eckig sind. Der mindestens eine Drehmomentübertragungsabschnitt des Trommelmotormantels dient dazu, das Drehmoment vom Trommelmotormantel auf ein Förderband zu übertragen. Dazu wird vorzugsweise ein Kettenrad eingesetzt, das auf dem Drehmomentübertragungsabschnitt des Trommelmotormantels angeordnet ist. Die Breite des mindestens einen Drehmomentübertragungsabschnitts entlang der Achse des Trommelmotormantels entspricht vorzugsweise mindestens der Breite der darauf anzuordnenden Kettenräder. Die Kettenräder weisen an ihrem Außenumfang Zähne auf, die auf die anzutreibenden Förderbänder bzw. Gliederkettenbänder abgestimmt sind. Durch den Einsatz unterschiedlicher Kettenräder können somit unterschiedliche Bandtypen angetrieben werden.

Diese eckige Ausbildung hat gegenüber einer zylindrischen Ausbildung den Vorteil, dass das Drehmoment über die eckige Querschnittsform der Außenfläche des Trommelmotormantels auf ein auf dem Trommelmotormantel angeordnetes Kettenrad übertragen werden kann. Auf diese Weise kann auf die im Stand der Technik erforderlichen Übertragungsmittel, wie Profilgummierung und Passfeder, verzichtet werden. Dadurch können einerseits die Kosten für diese Übertragungsmittel eingespart werden. Weiterhin werden die hygienischen Eigenschaften des Trommelmotors verbessert, da durch den Verzicht auf diese Übertragungsmittel die Anzahl der Teile und damit die Anzahl der Schnittstellen und Zwischenräume zwischen den Teilen reduziert wird und auf diese Weise auch nicht mehr die Möglichkeit der Ablagerung von Verschmutzungen und die Bildung von Rückständen beispielsweise zwischen der Profilgummierung und dem Trommelmotormantel, in der Passfedernut oder in der die Passfeder aufnehmenden Ausnehmung im Kettenrad besteht.

Vorzugsweise hat das Kettenrad eine auf die Querschnittsform der Außenfläche des Trommelmotormantels angepasste innere Ausnehmung, so dass möglichst die gesamte Außenfläche des Trommelmotormantels im Bereich des Drehmomentübertragungsabschnitts für die Drehmomentübertragung genutzt werden kann. Weiterhin vorzugsweise weist der Trommelmotor an seinem Trommelmotormantel mehrere, voneinander beabstandete Drehmomentübertragungsabschnitte auf, auf denen jeweils ein Kettenrad angeordnet ist. Dadurch kann eine gleichmäßige Übertragung des Drehmoments über die Länge des Trommelmotors in axialer Richtung des Trommelmotormantels erfolgen. Der Drehmomentübertragungsabschnitt kann sich auch über einen größeren Teil der axialen Länge des Trommelmotormantels erstrecken, so dass auch zwei oder mehrere Kettenräder von einander beabstandet auf demselben Drehmomentübertragungsabschnitt angeordnet sein können.

Vorzugsweise weist der Trommelmotor einen ersten Lagerdeckel auf, der den Hohlraum des Gehäusemantels am ersten Ende des Gehäusemantels verschließt. Weiterhin vorzugsweise weist der Trommelmotor einen zweiten Lagerdeckel auf, der den Hohlraum des Gehäusemantels am zweiten Ende des Gehäusemantels verschließt. Dabei ist es bevorzugt, dass der erste und/oder der zweite Lagerdeckel jeweils eine Öffnung zur Aufnahme des ersten bzw. zweiten Lagerzapfens aufweist bzw. aufweisen. Die Lagerdeckel weisen vorzugsweise eine Außenfläche auf, die im Querschnitt eckig ist und dem Querschnitt des Drehmomentübertragungsabschnitts entspricht. Weiterhin weisen die Lagerdeckel vorzugsweise eine innere zylindrische Bohrung auf. Durch die Lagerdeckel kann der Hohlraum des Trommelmotormantels verschlossen werden, so dass eine ausreichende Dichtheit für die Anwendung im Lebensmittelbereich gewährleistet werden kann. Weiterhin ist bevorzugt, dass der Trommelmotormantel und/oder die beiden Lagerdeckel aus Edelstahl ausgebildet sind. Edelstahl ist für Anwendungen im Lebensmittelbereich besonders bevorzugt. Einer oder beide der Lagerdeckel ist bzw. sind vorzugsweise mit dem Trommelmotormantel verschweißt oder durch eine Pressverbindung mit dem Trommelmotormantel verbunden. Diese Verbindungsformen gewährleisten eine besonders sichere Abdichtung des Hohlraums des Trommelmotormantels, was insbesondere in der lebensmittelverarbeitenden Industrie von Vorteil ist.

Die Erfindung kann dadurch fortgebildet werden, dass in dem Drehmomentübertragungsabschnitt die Innenfläche des Trommelmotormantels eckig ist. Die Erfindung kann weiterhin dadurch fortgebildet werden, dass in dem Drehmomentübertragungsabschnitt die Innenfläche des Trommelmotormantels parallel zur Außenfläche des Trommelmotormantels ausgebildet ist. Diese Fortbildungsformen sehen vor, dass sowohl die Innen- und Außenflächen des Trommelmotormantels eckig ausgebildet sind und sich vorzugsweise entsprechen. Dies ermöglicht in vorteilhafter Weite eine effiziente Herstellung des Trommelmotormantels.

Die Erfindung kann dadurch fortgebildet werden, dass die Außenfläche des Trommelmotormantels in dem Drehmomentübertragungsabschnitt und/oder die Innenfläche des Trommelmotormantels in dem Drehmomentübertragungsabschnitt im Querschnitt sechseckig ausgebildet ist bzw. sind. Eine sechseckige Ausbildung hat gegenüber beispielsweise einer quadratischen Ausbildung den Vorteil einer kompakteren Ausgestaltung. Bei einem gleichen maximalen zylindrischen Innendurchmesser, der von einem Quadrat und einem Sechseck umschlossen wird, weist das Sechseck einen ca. 20% kleineren effektiven zylindrischen Außendurchmesser und ein etwa 15% kleineres Massenträgheitsmoment auf als das Quadrat. Ein geringerer effektiver Außendurchmesser des Drehmomentübertragungsabschnitts des Trommelmotormantels bewirkt eine bessere Drehmomentübertragung.

Die Erfindung kann dadurch fortgebildet werden, dass sich der Drehmomentübertragungsabschnitt über die gesamte Länge des Trommelmotormantels erstreckt. Diese Fortbildungsform sieht vor, dass der Trommelmotormantel über seine gesamte axiale Länge einen gleichbleibenden Querschnitt aufweist und somit der gesamte Trommelmotormantel als Drehmomentübertragungsabschnitt ausgebildet ist. Dies hat einerseits den Vorteil einer einfachen Herstellung, da nur eine Querschnittsform über die gesamte axiale Länge vorhanden ist, und andererseits den Vorteil, dass kein Versatz und keine Sprünge in der Außenfläche entlang der Achse des Trommelmotormantels auftreten, in denen sich Verschmutzungen ablagern könnten.

Auch in dieser Fortbildungsform können zwei oder mehrere Kettenräder auf dem vollständig als Drehmomentübertragungsabschnitt ausgebildeten Trommelmotormantel angeordnet sein.

Die Erfindung kann dadurch fortgebildet werden, dass der Trommelmotormantel als im Querschnitt eckiges Hohlprofil ausgebildet ist. Besonders bevorzugt ist es, dass der Trommelmotormantel als im Querschnitt sechseckiges Hohlprofil ausgebildet ist. Die Verwendung eines Hohlprofils als Trommelmotormantel ermöglicht eine besonders effiziente und kostengünstige Herstellung. Eine über die gesamte Trommelmotormantellänge sechseckige Ausgestaltung verstärkt die oben genannten Vorteile des abschnittsweisen sechseckigen Querschnitts.

Eine bevorzugte Fortbildung des erfindungsgemäßen Trommelmotors ist gekennzeichnet durch ein, zwei oder mehrere auf dem Trommelmotormantel auswechselbar angeordnete Kettenräder, die jeweils eine innere Ausnehmung aufweisen, die der Form des Querschnitts der Außenfläche des Drehmomentübertragungsabschnitts entspricht. Die Kombination eines erfindungsgemäßen Trommelmotormantels mit - vorzugsweise in Abhängigkeit von der axialen Länge des Trommelmotormantels - einem, zwei oder mehreren Kettenrädern, die auf dem Drehmomentübertragungsabschnitt des Trommelmotormantels angeordnet sind und eine innere, auf den Querschnitt des Drehmomentübertragungsabschnitts abgestimmte Ausnehmung aufweisen, ermöglicht es, die mit der Erfindung verbundenen Vorteile optimal auszunutzen. Die Kettenräder sind vorzugsweise auswechselbar auf dem Drehmomentübertragungsabschnitt des Trommelmotormantels montiert, so dass sie gegen andere Kettenräder, insbesondere Kettenräder mit auf einen anderen Bandtyp abgestimmten Zähnen am Außenumfang, ausgetauscht werden können.

Ein weiterer Aspekt der Erfindung ist ein Kettenrad zur Übertragung eines Drehmoments von einem zuvor beschriebenen Trommelmotor auf ein Förderband, insbesondere ein Gliederkettenband, das dadurch gekennzeichnet ist, dass das Kettenrad eine eckige, vorzugsweise sechseckige, innere Ausnehmung aufweist. Durch diese, an den Querschnitt der Außenfläche des Drehmomentübertragungsabschnitts des Trommelmotormantels angepasste, Ausgestaltung der inneren Kettenradausnehmung kann eine besonders effiziente Drehmomentübertragung von der Außenfläche des Trommelmotormantels im Drehmomentübertragungsabschnitt auf das Kettenrad gewährleistet werden.

Das erfindungsgemäße Kettenrad kann dadurch fortgebildet werden, dass das Kettenrad ausgebildet ist, auswechselbar auf dem Drehmomentübertragungsabschnitt des Trommelmotormantels eines zuvor beschriebenen Trommelmotors montiert zu werden.

Zu den Vorteilen, Ausführungsvarianten und Ausführungsdetails dieses weiteren Aspekts der Erfindung und seiner Fortbildungen wird auf die zuvor beschriebenen, entsprechenden Aspekte derjenigen Produktformen und Fortbildungen verwiesen, die für den weiteren Aspekt der Erfindung relevant sind.

Eine bevorzugte Ausführungsform der Erfindung wird beispielhaft anhand der beiliegenden Figuren beschrieben. Es zeigen:
- Fig. 1:: eine dreidimensionale Ansicht eines erfindungsgemäßen Trommelmotors mit drei Kettenrädern,
- Fig. 2:: einen im Querschnitt quadratisch ausgebildeten Drehmomentübertragungsabschnitt eines Trommelmotormantels eines erfindungsgemäßen Trommelmotors, und
- Fig. 3:: einen im Querschnitt sechseckig ausgebildeten Drehmomentübertragungsabschnitt eines Trommelmotormantels eines erfindungsgemäßen Trommelmotors.

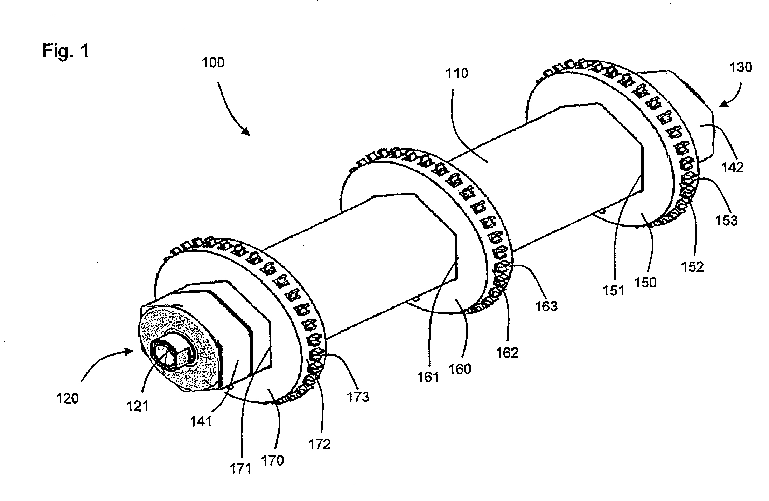

Fig. 1 zeigt einen erfindungsgemäßen Trommelmotor 100 mit einem Trommelmotormantel 110 und mit drei erfindungsgemäßen Kettenrädern 150, 160, 170. Der Trommelmotor 100 weist einen als sechseckiges Hohlprofil ausgebildeten Drehmomentübertragungsabschnitt auf. Der Drehmomentübertragungsabschnitt erstreckt sich bei dem in Fig. 1 gezeigten erfindungsgemäßen Trommelmotor 100 über die gesamte Länge des Trommelmotormantels 110 in axialer Richtung. Der Drehmomentübertragungsabschnitt ist daher in dem in Fig. 1 gezeigten erfindungsgemäßen Trommelmotor 100 mit dem Trommelmotormantel 110 identisch.

Der Trommelmotormantel 110 ist an seinem ersten Ende 120 mit einem Lagerdeckel 141 abgedichtet. Durch den Lagerdeckel 141 ragt ein erster Lagerzapfen 121. Am zweiten Ende 130 des Trommelmotormantels 110 ist ein weiterer Lagerdeckel 142 angeordnet, durch den ein zweiter Lagerzapfen (nicht dargestellt) ragt. Die Lagerdeckel weisen einen sechseckigen Außenquerschnitt und eine innere zylindrische Bohrung auf. Die Lagerzapfen dienen der Lagerung des Trommelmotors 100.

Auf der Außenfläche des Trommelmotormantels 110 sind äquidistant drei Kettenräder 150, 160, 170 angeordnet. Die Kettenräder 150, 160, 170 weisen jeweils eine sechseckige innere Ausnehmung 151, 161, 171 auf. Auf den Außenumfängen 152, 162, 172 der Kettenräder 150, 160, 170 sind Zähne 153, 163, 173 angeordnet, die auf ein anzutreibendes Band bzw. einen Bandtyp abgestimmt sind.

Der Trommelmotormantel 110 wird von in dem Hohlraum des Trommelmotormantels 110 angeordneten Motorkomponenten (nicht dargestellt) gegenüber den Lagerzapfen rotierend angetrieben. Das Drehmoment des Trommelmotormantels 110 wird über die sechseckige Ausbildung sowohl des Querschnitts der Außenfläche des Trommelmotormantels 110 als auch der inneren Ausnehmungen 151, 161, 171 der Kettenräder 150, 160, 170 auf die Kettenräder übertragen. Aufgrund der sechseckigen Ausbildung kann auf Passfedern und Profilgummierungen zur Drehmomentübertragung verzichtet werden, was Einsparungen in der Herstellung und eine geringere Verschmutzungsanfälligkeit des Trommelmotors 100 bewirkt.

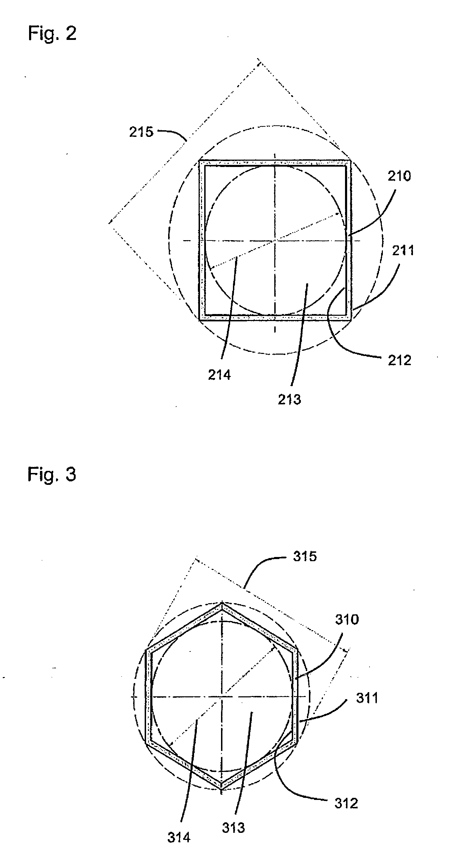

Fig. 2 zeigt einen im Querschnitt quadratisch ausgebildeten Drehmomentübertragungsabschnitt eines Trommelmotormantels 210 eines erfindungsgemäßen Trommelmotors mit einem Hohlraum 213. Der Trommelmotormantel 210 weist eine Außenfläche 211 und eine Innenfläche 212 auf. Sowohl die Innfläche 212 als auch die Außenfläche 211 sind quadratisch und weiterhin parallel zueinander ausgebildet. Der Trommelmotormantel 210 kann als im Querschnitt quadratisches Hohlprofil ausgebildet sein. Bei einem maximalen zylindrischen Innendurchmesser 214 weist der im Querschnitt quadratisch ausgebildete Drehmomentübertragungsabschnitt einen effektiven zylindrischen Außendurchmesser 215 auf.

Fig. 3 zeigt einen im Querschnitt sechseckig ausgebildeten Drehmomentübertragungsabschnitt eines Trommelmotormantels 310 eines erfindungsgemäßen Trommelmotors mit einem Hohlraum 313. Der Trommelmotormantel 310 weist eine Außenfläche 311 und eine Innenfläche 312 auf. Sowohl die Innfläche 312 als auch die Außenfläche 311 sind sechseckig und weiterhin parallel zueinander ausgebildet. Der Trommelmotormantel 310 kann als im Querschnitt sechseckiges Hohlprofil ausgebildet sein. Bei einem maximalen zylindrischen Innendurchmesser 314 weist der im Querschnitt sechseckig ausgebildete Drehmomentübertragungsabschnitt einen effektiven zylindrischen Außendurchmesser 315 auf. Diese sechseckige Ausbildung hat gegenüber der in Fig. 2 gezeigten quadratischen Ausbildung den Vorteil einer kompakteren Ausgestaltung. Bei gleichem maximalen zylindrischen Innendurchmesser weist der sechseckige Querschnitt in Fig. 3 einen ca. 20% kleineren effektiven zylindrischen Außendurchmesser und ein etwa 15% kleineres Massenträgheitsmoment auf als der quadratische Querschnitt in Fig. 2. Der geringere effektive Außendurchmesser des sechseckigen Drehmomentübertragungsabschnitts des Trommelmotormantels bewirkt eine bessere Drehmomentübertragung als ein quadratischer Querschnitt und erlaubt eine ähnlich kompakte Gestaltung des Trommelmotors wie ein zylindrischer Querschnitt.

## Patentansprüche

1. Trommelmotor (100) zum Antreiben eines Förderbandes, insbesondere eines Gliederkettenbandes in einer hygienischen Umgebung mit Spritz- oder Strahlwasserbelastung, umfassend
- einen Trommelmotormantel (110) mit einem darin ausgebildeten Hohlraum,
- in dem Hohlraum angeordnete Motorkomponenten, nämlich einen Rotor und einen Stator,
- einen an einem ersten Ende (120) des Trommelmotormantels angeordneten ersten Lagerzapfen (121) und
- einen an einem zweiten Ende (130) des Trommelmotormantels angeordneten zweiten Lagerzapfen,
- wobei Rotor und Stator solcherart mit dem Trommelmotormantel und dem ersten und zweiten Lagerzapfen mechanisch gekoppelt sind, dass eine Relativdrehung zwischen Rotor und Stator eine Relativdrehung zwischen dem Trommelmotormantel einerseits und dem ersten und zweiten Lagerzapfen andererseits bewirkt,
wobei der Trommelmotormantel mindestens einen Drehmomentübertragungsabschnitt aufweist, in dem die Außenfläche des Trommelmotormantels im Querschnitt eckig ist,
**dadurch gekennzeichnet, dass** in dem Drehmomentübertragungsabschnitt die Innenfläche des Trommelmotormantels (110) eckig ist.

2. Trommelmotor (100) nach dem vorhergehenden Anspruch,
**dadurch gekennzeichnet, dass**, in dem Drehmomentübertragungsabschnitt die Innenfläche des Trommelmotormantels (110) parallel zur Außenfläche des Trommelmotormantels ausgebildet ist.

3. Trommelmotor (100) nach einem der vorhergehenden Ansprüche,
**dadurch gekennzeichnet, dass** die Außenfläche des Trommelmotormantels (110) in dem Drehmomentübertragungsabschnitt und/oder die Innenfläche des Trommelmotormantels in dem Drehmomentübertragungsabschnitt im Querschnitt sechseckig ausgebildet ist bzw. sind.

4. Trommelmotor (100) nach einem der vorhergehenden Ansprüche,
**dadurch gekennzeichnet, dass** sich der Drehmomentübertragungsabschnitt über die gesamte Länge des Trommelmotormantels (110) erstreckt.

5. Trommelmotor (100) nach dem vorhergehenden Anspruch,
**dadurch gekennzeichnet, dass** der Trommelmotormantel (110) als im Querschnitt eckiges Hohlprofil ausgebildet ist.

6. Trommelmotor (100) nach dem vorhergehenden Anspruch,
**dadurch gekennzeichnet, dass** der Trommelmotormantel (110) als im Querschnitt sechseckiges Hohlprofil ausgebildet ist.

7. Trommelmotor (100) nach einem der vorhergehenden Ansprüche,
**gekennzeichnet durch** ein, zwei oder mehrere auf dem Trommelmotormantel (110) auswechselbar angeordnete Kettenräder (150, 160, 170), die jeweils eine innere Ausnehmung (151, 161, 171) aufweisen, die der Form des Querschnitts der Außenfläche des Drehmomentübertragungsabschnitts entspricht.

## Claims

1. Drum motor (100) for driving a conveyor belt, especially a link chain belt in a hygienic environment subjected to sprays or jet water, comprising
- a drum motor casing (110) having a cavity formed therein,
- motor components arranged in the cavity, namely, a rotor and a stator,
- a first bearing journal (121) arranged at a first end (120) of the drum motor casing and
- a second bearing journal arranged at a second end (130) of the drum motor casing,
- wherein rotor and stator are mechanically coupled to the drum motor casing and the first and second bearing journals in such a way that a relative rotation between rotor and stator brings about a relative rotation between the drum motor casing on the one hand and the first and second bearing journals on the other hand,
wherein the drum motor casing has at least one torque transmitting portion in which the outer surface of the drum motor casing is angular in cross-section,
**characterised in that** in the torque transmitting portion the inner surface of the drum motor casing (110) is angular.

2. Drum motor (100) according to the preceding claim,
**characterised in that** in the torque transmitting portion the inner surface of the drum motor casing (110) is formed parallel to the outer surface of the drum motor casing.

3. Drum motor (100) according to either of the preceding claims,
**characterised in that** the outer surface of the drum motor casing (110) in the torque transmitting portion and/or the inner surface of the drum motor casing in the torque transmitting portion is/are formed so as to be hexagonal in cross-section.

4. Drum motor (100) according to any one of the preceding claims,
**characterised in that** the torque transmitting portion extends over the entire length of the drum motor casing (110).

5. Drum motor (100) according to the preceding claim,
**characterised in that** the drum motor casing (110) is designed as an angular hollow profile in cross-section.

6. Drum motor (100) according to the preceding claim,
**characterised in that** the drum motor casing (110) is designed as hexagonal hollow profile in cross-section.

7. Drum motor (100) according to any one of the preceding claims,
**characterised by** one, two or more chain wheel(s) (150, 160, 170) replaceably arranged on the drum motor casing (110), each having an inner recess (151, 161, 171) which matches the shape of the cross-section of the outer surface of the torque transmitting portion.

## Revendications

1. Moteur à tambour (100) pour l'entraînement d'une bande de transport, en particulier une bande à maillons dans un environnement hygiénique avec une sollicitation de jet d'eau ou de projection d'eau, comprenant
- une enveloppe de moteur à tambour (110) avec une cavité réalisée dedans,
- des composants de moteur disposés dans la cavité, à savoir un rotor et un stator,
- un premier tourillon (121) disposé sur une première extrémité (120) de l'enveloppe de moteur à tambour et
- un second tourillon disposé sur une seconde extrémité (130) de l'enveloppe de moteur à tambour,
- le rotor et le stator étant couplés mécaniquement avec l'enveloppe de moteur à tambour et le premier et le second tourillons de telle manière qu'une rotation relative entre le rotor et le stator provoque une rotation relative entre l'enveloppe de moteur à tambour d'une part et le premier et le second tourillons d'autre part,
l'enveloppe de moteur à tambour présentant au moins une section de transmission de couple, dans laquelle la surface extérieure de l'enveloppe de moteur à tambour présente une section transversale polygonale,
**caractérisé en ce que** la surface intérieure de l'enveloppe de moteur à tambour (110) est polygonale dans la section de transmission de couple.

2. Moteur à tambour (100) selon la revendication précédente, **caractérisé en ce que** la surface intérieure de l'enveloppe de moteur à tambour (110) est réalisée parallèlement à la surface extérieure de l'enveloppe de moteur à tambour dans la section de transmission de couple.

3. Moteur à tambour (100) selon l'une quelconque des revendications précédentes, **caractérisé en ce que** la surface extérieure de l'enveloppe de moteur à tambour (110) dans la section de transmission de couple et/ou la surface intérieure de l'enveloppe de moteur à tambour dans la section de transmission de couple présente ou présentent une section transversale hexagonale.

4. Moteur à tambour (100) selon l'une quelconque des revendications précédentes, **caractérisé en ce que** la section de transmission de couple s'étend sur toute la longueur de l'enveloppe de moteur à tambour (110).

5. Moteur à tambour (100) selon la revendication précédente, **caractérisé en ce que** l'enveloppe de moteur à tambour (110) est réalisée comme un profilé creux polygonal en section transversale.

6. Moteur à tambour (100) selon la revendication précédente, **caractérisé en ce que** l'enveloppe de moteur à tambour (110) est réalisée comme un profil creux hexagonal en section transversale.

7. Moteur à tambour (100) selon l'une quelconque des revendications précédentes, **caractérisé par** une, deux ou plusieurs roues à chaîne (150, 160, 170) disposées de manière interchangeable sur l'enveloppe de moteur à tambour (110) qui présentent respectivement un évidement intérieur (151, 161, 171) correspondant à la forme de la section transversale de la surface extérieure de la section de transmission de couple.
